# EUROPÄISCHE PATENTSCHRIFT

(11) **EP 3 449 416 B1**
(45) Veröffentlichungstag und Bekanntmachung des Hinweises auf die Patenterteilung: **25.03.2020**
(21) Anmeldenummer: 17721057.2
(22) Anmeldetag: 13.04.2017
(51) Int. Cl.: G06F 21/88, H04W 12/12, H04W 12/02, H04W 12/08

(54) **VERFAHREN UND VORRICHTUNG ZUM LÖSCHEN VON SICHERHEITSRELEVANTER INFORMATION IN EINEM GERÄT**
METHOD AND APPARATUS FOR DELETING SECURITY-RELEVANT INFORMATION IN A DEVICE
PROCÉDÉ ET DISPOSITIF POUR EFFACER DES INFORMATIONS DE SÉCURITÉ DANS UN APPAREIL

(30) Priorität: 28.04.2016 DE 102016207238
(43) Veröffentlichungstag der Anmeldung: 06.03.2019
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2017/058924
(87) Internationale Veröffentlichungsnummer: WO 2017/186506

(56) Entgegenhaltungen:
- US-A1- 2006 225 142
- US-A1- 2006 225 142
- US-A1- 2009 060 194
- US-A1- 2009 060 194
- US-A1- 2009 249 460
- US-A1- 2009 249 460
- US-A1- 2010 058 077
- US-A1- 2010 058 077
- US-A1- 2010 235 567
- US-A1- 2014 351 950
- US-A1- 2014 351 950
- US-B1- 8 615 612
- US-B1- 8 615 612

## Beschreibung

Die Erfindung bezieht sich auf eine Vorrichtung und ein Verfahren zum Löschen von sicherheitsrelevanter Information, wie beispielsweise kryptographische Schlüssel, die in mobilen oder auch ortsfest installierten Geräten enthalten sind.

Mobile Geräte, wie beispielsweise Roboter, unbemannte Flugobjekte, autonome Fahrzeuge können sensible Daten speichern. Diese sensiblen Daten werden vorzugsweise durch kryptographische Verfahren gesichert, so dass diese nur von befugten Instanzen ausgelesen und im Klartext gelesen werden können. Dazu werden kryptographische Schlüssel benötigt. Solche kryptographischen Schlüssel werden beispielsweise über einen generischen Schlüssel erzeugt und in einem Sicherheitsmodul gespeichert. Solche sicherheitsrelevante Information muss vor dem Zugriff unbefugter Personen oder vor dem Zugriff durch unbefugte Vorrichtungen geschützt werden, um eine Manipulation von oftmals sicherheitskritischen Funktionen, die die sicherheitskritische Information verwenden, zu verhindern. Häufig werden Geräte auch nur dann für das Betreiben einer sicherheitskritischen Funktion von amtlicher Seite zugelassen, wenn ein Gerät vorgeschriebene Schutzmaßnahmen für sicherheitsrelevante Informationen bereitstellt.

Es sind beispielsweise Manipulationssensoren, wie beispielsweise Bohrschutzfolien, Gehäuseschalter oder Lichtsensoren bekannt, die eine Gerätemanipulation bzw. eine Manipulation eines im Gerät angeordneten Sicherheitsmoduls erkennen und eine Schlüssel-Löschfunktion initiieren.

Solche Manipulationssensoren schützen jedoch nur vor einem direkten physikalischen Angriff auf ein solches Sicherheitsmodul.

Aus US 2009/060194 A1 ist eine Methode zum Schutz von integrierten kryptografischen Prozessoren bekannt. Mittels eines Betriebsprofils wird überprüft, ob das System manipuliert wird.

Die US 2006/225142 A1 beschreibt eine Methode und ein System zum Auslösen einer kompletten Auslöschung von vertraulichen Daten in einem elektrischen Gerät. Dazu wird das Gerät überwacht, indem Diagnosewerte mit vorgegebenen Schwellwerten verglichen werden.

In US 2014/351950 A1 wird ein Kommunikationsgerät beschrieben, welches bei der Detektion von Vibrationen gespeicherte Informationen schützt.

US 8 615 612 B1 beschreibt ein Gehäuse für ein tragbares Speichermedium zum Schutz vor Einflüssen von außen, wobei das Gehäuse mit einem Anti-Manipulationsschutz ausgestattet ist.

Die US 2010/058077 A1 beschreibt ein manipulationssicheres Gerät, das bei Manipulation auf dem Gerät gespeicherte, vertrauliche Informationen löscht.

Aus US 2009/249460A1 ist eine Methode und ein System zum Verändern der Funktion eines elektronischen Geräts bei einer nicht autorisierter Benutzung bekannt.

Aus US 2010/249460A1 ist ein Fluggerät und ein Verfahren zum Löschen von Daten bekannt, bei dem Daten von einem Speicher des Fluggeräts gelöscht werden, sobald ein vordefiniertes Ereignis eintritt.

Zunehmend werden sicherheitsrelevante Informationen in mobilen Objekten, beispielsweise zur sicheren Ortsbestimmung und Navigation von unbemannten Flugobjekten oder autonomen Fahrzeugen verwendet. Zudem wird Schlüsselmaterial für verschiedene Funktionen des Gerätes bzw. Objektes benötigt und somit wächst die Menge an sicherheitsrelevanten Daten an, so dass ein Löschvorgang von sicherheitsrelevanter Information vor einer mechanischen Zerstörung des Gerätes beispielsweise durch Absturz, Kollision, Beschuss eingeleitet und insbesondere abgeschlossen werden muss. Ansonsten besteht die Gefahr, dass sensible Daten des verunglückten Mobilobjektes Unberechtigten zugänglich werden. Auch besteht die Gefahr, dass vorhandene Manipulationssensoren, auch Tamperschutzfunktion genannt, eines verunglückten mobilen Gerätes bzw. eines darin enthaltenen Sicherheitsmoduls nicht mehr korrekt funktioniert und die geforderte Manipulationsschutzfunktion nicht mehr realisieren kann.

Es ist somit die Aufgabe der vorliegenden Erfindung, ein Verfahren und eine Vorrichtung zu schaffen, die sicherstellt, dass sicherheitsrelevante Daten des Gerätes auch bei einem Unfall oder sonstigem unvorhergesehenem Ereignis zuverlässig und vollständig gelöscht werden.

Die Aufgabe wird durch die in den unabhängigen Ansprüchen beschriebenen Maßnahmen gelöst. In den Unteransprüchen sind vorteilhafte Weiterbildungen der Erfindung dargestellt.

Das erfindungsgemäße Verfahren zum Löschen von sicherheitsrelevanten Informationen in einem Gerät weist folgende Verfahrensschritte auf:
- Ermitteln mindestens eines Bewegungsparameters des Geräts über die Zeit,
- Überwachen der ermittelten Bewegungsparameter über die Zeit in Abhängigkeit von mindestens einem vorgegebenen Bewegungsmuster, und
- Auslösen eines Löschvorgangs der sicherheitsrelevanten Information, wenn der ermittelte Bewegungsparameter über die Zeit dem mindestens einen vorgegebenen Bewegungsmuster entspricht.

Mobile Geräte weisen bei typischen Unfallszenarien auch typische Bewegungsmuster auf. So geht ein Flugobjekt bei einem Ausfall des Antriebs in einen für einen Absturz typischen Sinkflug über oder es wird eine vorgegebene Höhe über Grund mit einer Geschwindigkeit über einem vorgegebenen Grenzwert unterschritten. Entsprechende Bewegungsmuster werden als vorgegebene Bewegungsmuster im Flugobjekt gespeichert. Durch das Überwachen der ermittelten Bewegungsparameter kann ein Unfall bzw. eine Zerstörung des Gerätes mit großer Sicherheit erkannt werden und rechtzeitig vor der Zerstörung des Gerätes das Löschen der sicherheitsrelevanten Information eingeleitet werden. Der Löschvorgang kann somit vor der Zerstörung des Gerätes bzw. des Sicherheitsmoduls, auf dem die sicherheitsrelevante Information gespeichert ist, abgeschlossen werden. Somit kann mit hoher Wahrscheinlichkeit sichergestellt werden, dass auch bei unvorhergesehenen Ereignissen, die zu einer mechanischen Zerstörung des Gerätes führen, sicherheitsrelevante Information vom Gerät gelöscht und damit nicht mehr zugreifbar sind.

In einer vorteilhaften Ausführungsform wird als Bewegungsparameter eine Position, eine Geschwindigkeit, eine Beschleunigung oder eine Ausrichtung des Gerätes ermittelt.

So kann beispielsweise über die Positionsangabe die Höhe des Gerätes über dem Erdboden überwacht werden und bei Unterschreiten einer minimalen Höhe oder beim Überschreiten einer maximale Höhe der Löschvorgang ausgelöst werden. In gleicher Weise kann durch das Überschreiten einer maximalen Beschleunigung ein Unfall oder ein Fehlverhalten des Gerätes angenommen werden. Durch das Ermitteln der Beschleunigung als Bewegungsparameter kann beispielsweise auch bei ortsfest installierten Geräten eine Manipulation erkannt werden und der Löschvorgang ausgelöst werden.

In einer vorteilhaften Ausführungsform wird der Löschvorgang dann ausgelöst, wenn der mindestens eine Bewegungsparameter dem vorgegebenen Bewegungsmuster mindestens für eine vorgegebene Zeitdauer und/oder mit einer vorbestimmten Genauigkeit entspricht.

Dadurch wird sichergestellt, dass keine kurzzeitige oder statistisch auftretende Schwankung des ermittelten Bewegungsparameters zu einem vorzeitigen bzw. nicht notwendigem Löschen der sicherheitsrelevanten Information führt.

In einer vorteilhaften Ausführungsform ist das vorgegebene Bewegungsmuster eine Bewegungstrajektorie des Gerätes.

Eine Bewegungstrajektorie bezeichnet eine Raumkurve, entlang der sich das Gerät, beispielsweise der Schwerpunkt des Gerätes, bewegt. Durch die Überwachung der Bewegung des Gerätes im Vergleich zu vorgegebenen Bewegungstrajektorien, die unzulässige bzw. für einen Unfall typisches Bewegungsmuster kennzeichnen, kann auch die manipulative Ablenkung des Gerätes von der Trajektorie erkannt werden und bei sehr sicherheitskritischen Geräten bereits dies ein Löschen der sicherheitsrelevanten Information auslösen.

In einer vorteilhaften Ausführungsform kennzeichnet ein vorgegebenes Bewegungsmuster einen Sonderbetriebsmodus des Gerätes.

Ist beispielsweise das aufgezeichnete Bewegungsparameter identisch mit der Bewegungstrajektorie eines Sonderbetriebsmodus, der beispielsweise einer Notlandung, einen Nothalt, eine Ausweichfunktion zur Schadensbegrenzung eines Unfalls kennzeichnet, so kann auch in diesem Fall der Löschvorgang eingeleitet und abgeschlossen werden.

In einer vorteilhaften Ausführungsform wird der Bewegungsparameter eines das Gerät umgebenden Mediums ermittelt.

Beispielsweise kann die Strömungsgeschwindigkeit der Luft an der Oberfläche eines fliegenden Gerätes oder in einem Abstand von einem fliegenden Objekt ermittelt und überwacht werden und somit ein Strömungsabriss, der einen Absturz zur Folge hat oder kennzeichnet, erkannt werden und das rechtzeitige Löschen der sicherheitsrelevanten Daten ausgelöst werden.

Die erfindungsgemäße Vorrichtung zum Löschen von sicherheitsrelevanter Information in einem Gerät umfasst eine Detektionseinheit, die derart ausgebildet ist, mindestens einen Bewegungsparameter des Gerätes zu ermitteln, eine Überwachungseinheit, die derart ausgebildet ist, die ermittelten Bewegungsparameter über die Zeit in Abhängigkeit von mindestens einem vorgegebenen Bewegungsmuster zu überwachen, und eine Löscheinheit, die derart ausgebildet ist, einen Löschvorgang der sicherheitsrelevanten Information auszulösen, wenn der ermittelten Bewegungsparameter über die Zeit dem vorgegebenen Bewegungsmuster entspricht.

Die sicherheitsrelevante Information einer solchen Vorrichtung kann dadurch bereits vor einer mechanischen Zerstörung mit hoher Wahrscheinlichkeit gelöscht werden und somit ein unerlaubtes Ermitteln dieser Information nach einem unvorhergesehenen Ereignis verhindert werden.

In einer vorteilhaften Ausführungsform weist die Detektionseinheit mindestens einen Sensor, bevorzugt einen Inertialsensor, einen Beschleunigungssensor, einen Magnetfeldsensor oder einen Lagesensor auf, der den mindestens einen Bewegungsparameter ermittelt.

In einer vorteilhaften Ausführungsform ist die Löscheinheit mit einem Sicherheitsmodul, das sicherheitsrelevante Information speichert, direkt verbindbar.

Durch eine direkte Verbindung zwischen Löscheinheit und einem Sicherheitsmodul, das sicherheitsrelevante Information speichert, kann die Verzögerungszeit zwischen einem Löschvorgang und dem Einsetzen des eigentlichen Löschvorgangs optimiert werden. Ebenfalls wird die Zuverlässigkeit des Auslösens des Löschvorgangs erhöht, da keine Verbindungsleitungen zwischen Löscheinheit und Sicherheitsmodul existieren, die bei einem Unfall beschädigt werden können und ein Empfangen eines Löschsignals in der Löscheinheit können.

Ein erfindungsgemäßes Gerät, das ein mobiles Gerät oder ein ortsfest installiertes Gerät ist, umfasst eine entsprechende Vorrichtung zum Löschen von sicherheitsrelevanter Information.

Insbesondere mobile Geräte können durch Aufprall auf einen festen Körper bzw. Oberfläche oder durch Eindringen in ein anderes Medium, beispielsweise Wasser, beschädigt werden, ohne dass der vorhandener Manipulationsschutz dies erkennt und das Löschen der sicherheitsrelevanten Information auslöst. Daneben können durch die genannten Sensoren Erschütterungen oder abrupte Bewegungsänderungen zuverlässig detektiert werden, die bei ortsfest installierten Geräten auf eine Beschädigung oder auch ein unerlaubtes Entfernen des Gerätes schließen lassen. In beiden Fällen kann basierend auf dieser Information das Löschen veranlasst werden.

Des Weiteren wird ein Computerprogrammprodukt beansprucht, das direkt in einen Speicher eines digitalen Computers ladbar ist und Programmcodeteile umfasst, die dazu geeignet sind, die Schritte des Verfahrens durchzuführen. Des Weiteren wird ein Datenträger beansprucht, der das Computerprogrammprodukt speichert.

Ausführungsbeispiele des erfindungsgemäßen Verfahren sowie der erfindungsgemäßen Vorrichtung sind in den Zeichnungen beispielhaft dargestellt und werden anhand der nachfolgenden Beschreibung näher erläutert. Es zeigen:
- Figur 1: ein allgemeines Ausführungsbeispiel des erfindungsgemäßen Verfahrens als Ablaufdiagramm;
- Figur 2: ein zweites Ausführungsbeispiel des erfindungsgemäßen Verfahrens als Ablaufdiagramm;
- Figur 3: ein Ausführungsbeispiel einer erfindungsgemäßen Vorrichtung in Blockdarstellung;
- Figur 4: ein Ausführungsbeispiel eines erfindungsgemäßen Gerätes mit einer erfindungsgemäßen Vorrichtung in Blockdarstellung; und
- Figur 5: ein Ausführungsbeispiel eines vorgegebenen Bewegungsmusters.

Einander entsprechende Teile sind in allen Figuren mit den gleichen Bezugszeichen versehen.

Eine Vielzahl von Geräten mit Mikroprozessoren, wie beispielsweise Computer, aber auch Roboter, Flugobjekte, Fahrzeuge oder auch Feldgeräte in Automatisierungsanlagen verwenden kryptographische Verfahren, um manipulationsgeschützt mit Kommunikationspartnern zu kommunizieren und/oder beispielsweise eine Funknavigationsanwendungen mit vertrauenswürdigen und manipulationssicheren Signalen verwenden zu können. Dazu werden sicherheitsrelevante Informationen, wie beispielsweise in den kryptographischen Verfahren verwendete kryptographische Schlüssel, in dem entsprechenden Gerät oder in einer speziellen Vorrichtung, die im Gerät angeordnet ist, gespeichert.

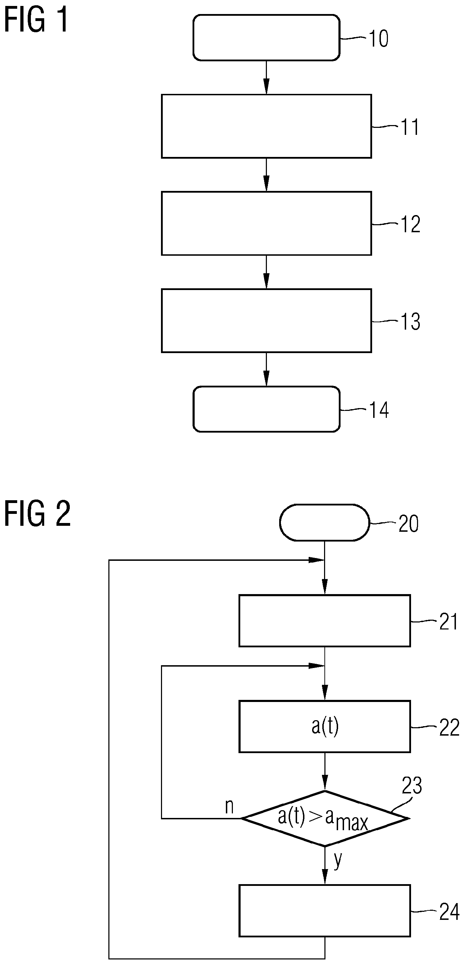

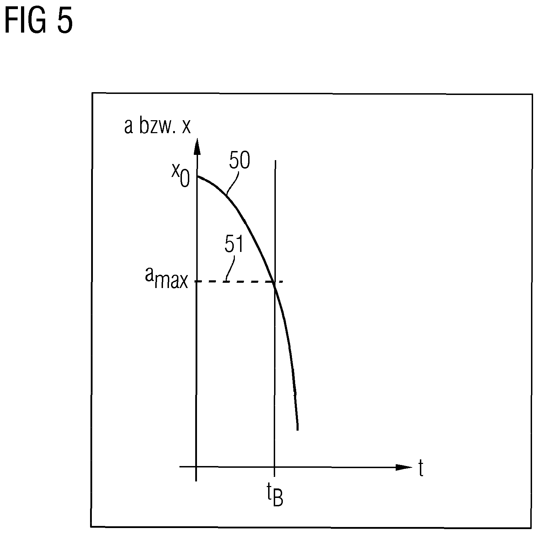

Mit dem erfindungsgemäßen Verfahren, wie in Figur 1 abgebildet, wird sichergestellt, dass sicherheitsrelevante Information frühzeitig vor einer Funktionsuntüchtigkeit des Gerätes gelöscht wird. Im Ausgangszustand 10 des Verfahrens liegen sicherheitsrelevante Informationen in einem Gerät vor. Diese können beispielsweise in einem Sicherheitsmodul gespeichert sein. Dabei wird im Verfahrensschritt 11 kontinuierlich mindestens ein Bewegungsparameter des Gerätes über die Zeit ermittelt. Ein solcher Bewegungsparameter kann beispielsweise die Position des Gerätes, die Geschwindigkeit, die Beschleunigung oder auch die Ausrichtung des Gerätes kennzeichnen. Es wird somit beispielsweise eine Bewegungstrajektorie des Gerätes aufgezeichnet. Eine solche Bewegungstrajektorie ist beispielsweise eine Bahnkurve im zweidimensionalen Raum, wie in Fig. 5 dargestellt, oder auch eine Raumkurve in einem dreidimensionalen Koordinatensystem, entlang derer sich beispielsweise der Schwerpunkt des Gerätes bzw. der Vorrichtung bewegt. Neben der Position bzw. dem Raumpunkt des Gerätes kann auch dessen Geschwindigkeit oder dessen Beschleunigung oder auch die Ausrichtung des Gerätes ermittelt werden.

Die Bewegungsparameter können durch das Gerät ermittelt werden. Dazu können in einer Variante Crash-Sensoren des Gerätes verwendet werden, die z.B. als weitere Funktion einen Airbag oder Gurtstraffer auslösen. In einer anderen Variante ist in dem Gerät ein Sicherheitsmodul enthalten, das unabhängig oder zusätzlich zu Sensoren des Geräts Sensoren enthält. Ein solches Sicherheitsmodul hat den Vorteil, dass es mit wenig Aufwand in ein Gerät integrierbar ist, da es die erfindungsgemäße Funktionalität als integrierte Funktion aufweist.

Im Verfahrensschritt 12 wird nun ebenfalls kontinuierlich der ermittelte Bewegungsparameter über die Zeit gegenüber mindestens einem vorgegebenen Bewegungsmuster überwacht. Bei dem vorgegebenen Bewegungsmuster kann es sich insbesondere auch um eine Bewegungstrajektorie des Gerätes handeln. Insbesondere können vorgegebene Bewegungstrajektorien einem Sonderbetriebsmodus des Geräts, wie beispielsweise einer Notlandung, einem Nothalt, einem Ausweichen zur Schadensbegrenzung bei einem Unfall entsprechen.

Die vorgegebenen Bewegungsmuster können sich über eine unterschiedlich lange Zeitdauer erstrecken. Die Zeitdauer kann von einer oder weniger Millisekunden bis hin zu mehreren Sekunden oder gar Minuten betragen. Beispielsweise kann ein Bewegungsmuster bereits ein kurzzeitiges Überschreiten einer vorgegebenen maximalen Geschwindigkeit sein. Ein vorgegebenes Bewegungsmuster kann ebenfalls in einem Höhenprofil oder beispielsweise einer konstanten Höhe über einer Oberfläche sein, so dass bei einem Unterschreiten dieser Mindesthöhe ein Löschvorgang der sicherheitsrelevanten Information ausgelöst wird, siehe Verfahrensschritt 13.

Dabei kann des Weiteren der Löschvorgang davon abhängig gemacht werden, dass ein vorgegebener Schwellwert mindestens für eine vorgegebene Zeitdauer erreicht oder überschritten wird. Dies verhindert, dass kurzzeitige Schwankungen, die eventuell nur durch statistische Effekte oder Meßfehler in Sensoren begründet sind, den Löschvorgang auslösen und somit beispielsweise wichtige Funktionen im Gerät nicht weiter ausgeführt werden können.

Andererseits muss die vorgegebene Zeitdauer der Übereinstimmung von ermitteltem Bewegungsmuster mit dem vorgegebenen Bewegungsmuster derart gewählt werden, dass genügend Zeit bleibt, um den Löschvorgang komplett durchführen und abschließen zu können.

In einer Variante kann auch ein Bewegungsparameter eines das Gerät umgebenden Mediums ermittelt werden. Beispielsweise kann die Strömungsgeschwindigkeit von Luft über die Oberfläche des Gerätes oder Teile des Gerätes gemessen und mit einer vorgegebenen Bewegungstrajektorie des Mediums verglichen werden. Desgleichen können beispielsweise der Druck an der Oberfläche des Gerätes gemessen werden. Es können dabei ein oder mehrere Sensoren beispielsweise an unterschiedlichen Stellen an oder über der Oberfläche des Gerätes oder auch innerhalb des Gerätes zur Detektion von Bewegungsparametern verwendet werden.

In Figur 2 ist der Ablauf des Verfahrens am Beispiel der Überwachung der Beschleunigung eines Gerätes dargestellt. Ausgangspunkt des Verfahrens ist der Zustand 20, in dem ein Gerät beispielsweise mit einem Sicherheitsmodul einen Beschleunigungssensor oder einen Inertialsensor aufweist, der kontinuierlich oder in vorgegebenen Zeitabständen die Beschleunigung des Gerätes und insbesondere des Sicherheitsmoduls misst. Im Sicherheitsmodul werden beispielsweise kryptographische Schlüsselmaterialien für verschiedene Anwendungen des Gerätes erzeugt. Im Verfahrensschritt 21 wird ein solches Schlüsselmaterial oder auch beliebige andere sicherheitsrelevante Information gespeichert. Im Verfahrensschritt 22 wird die Beschleunigung des Gerätes oder auch speziell des Sicherheitsmoduls bestimmt. Im Verfahrensschritt 23 wird nun die ermittelte Beschleunigung beispielsweise gegenüber einem vorgegebenen maximalen Beschleunigungswert verglichen. Ist die ermittelte Beschleunigung über einen vorgegebenen Zeitraum größer als ein vorgegebener maximaler Beschleunigungswert, wird nachfolgend im Verfahrensschritt 24 das Löschen eines Schlüsselspeichers und damit aller in der Vorrichtung bzw. in einem Gerät gespeicherten sicherheitsrelevanten Informationen ausgelöst. Dies wird durch den Pfeil, der zum Verfahrensschritt 21 führt, gekennzeichnet. Der Löschvorgang wird dann statt dem Speichern von Schlüsselmaterial als Verfahrensschritt 21 ausgeführt. Ist die zum Zeitpunkt t gemessene Beschleunigung a(t) kleiner als der vorgegebene Maximalwert aₘₐₓ, so wird lediglich eine weitere Detektion der Beschleunigung veranlasst. Dies wird durch den Pfeil vom Verfahrensschritt 23 zu Verfahrensschritt 22 gekennzeichnet.

Die Überwachung der gemessenen Bewegungsparameter wird insbesondere auch über eine Zeitperiode durchgeführt und ein Löschen der sicherheitsrelevanten Information erst dann ausgelöst, wenn der sich ergebende zeitliche Verlauf des detektierten Bewegungsparameters einem vorgegebenen Bewegungsmuster bzw. einer entsprechenden Bewegungstrajektorie oder einem vorgegebenen Verlauf des Bewegungsparameters entspricht oder von dem vorgegebenen Bewegungsmuster oder Bewegungstrajektorie abweicht.

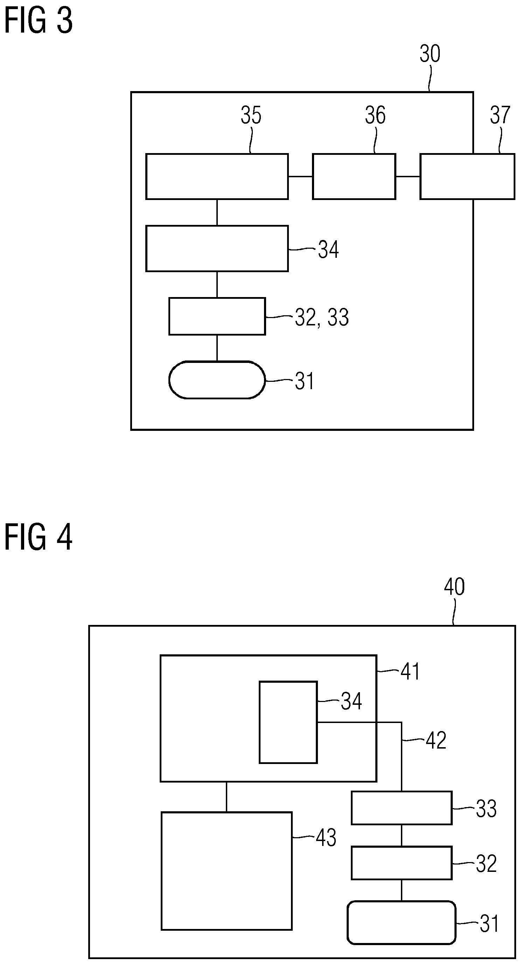

Figur 3 zeigt eine Vorrichtung zum Löschen von sicherheitsrelevanter Information in einem Gerät. Die Vorrichtung umfasst eine Detektionseinheit 31. Die Detektoreinheit 31 kann einen oder auch mehrere Sensoren, beispielsweise einen Inertialsensor, der eine Beschleunigung oder eine Drehrate eines Körpers misst, enthalten. Solche Inertialsensoren werden beispielsweise in Trägheitsnavigationssystemen zur Anwendung in Flugzeugen oder Raketen zur Flugnavigation verwendet.

Die Detektionseinheit 31 kann auch mehrteilig und an verschiedenen Stellen in und am Gerät ausgebildet sein. Es können beispielsweise ein oder mehrere Lagesensoren oder Geschwindigkeitssensoren zur Detektion von mindestens einem Bewegungsparameter im oder am Gerät 30 angebracht sein.

Eine Überwachungseinheit 32 überwacht eine über die Zeit ermittelte Bewegung gegenüber einem vorgegebenen Bewegungsmuster und zeichnet diese vorzugsweise auf. Eine Löscheinheit 33 löst einen Löschvorgang der sicherheitsrelevanten Information aus, wenn vorgegebene Kriterien erfüllt sind. Die Überwachungseinheit 32 und die Löscheinheit 33 sind beispielsweise in einem Aufpralldetektor integriert in der Vorrichtung 30 angeordnet.

Die in Figur 3 dargestellte Vorrichtung 30 ist beispielsweise ein Sicherheitsmodul mit einer externen Schnittstelle 37, beispielsweise zu einem seriellen Datenbus gemäß dem I2C, einem USB, einem RS232 oder der SPI Standard. Über die Schnittstelle 37 ist die Vorrichtung 30 z.B. mit einem Feldgerät, einem Steuergerät, einem Satellitennavigationsempfänger oder einem Computersystem verbindbar. Ein Kommandoprozessor 36 führt empfangene Kommandos, wie beispielsweise zum Verschlüsseln oder Entschlüsseln von Daten, zum Signieren oder zum Prüfen einer Signatur, zum Berechnen oder zum Prüfen einer kryptographischen Prüfsumme oder auch zum Erzeugen einer kryptographischen Pseudozufallsfolge aus.

Der Kommandoprozessor 36 verwendet dazu eine Verschlüsselungseinheit 35, auch als Kryptoengine bezeichnet, die symmetrische Kryptoalgorithmen, wie z.B. AES, asymmetrische Kryptoverfahren, wie beispielsweise RSA, Diffie-Hellman Key Exchange oder ECC, Algorithmen zur digitalen Signatur, wie DSA oder ECDSA, kryptographische Hashfunktionen, wie beispielsweise HMAC oder Schlüsselableitungsfunktionen, wie beispielsweise KDF, realisiert. Weiterhin ist ein Schlüsselspeicher 34 enthalten. Die Löscheinheit 33 ist mit dem Schlüsselspeicher 34 verbunden und sendet einen Löschbefehl an den Schlüsselspeicher 34, der dort ein Löschen sämtlicher sicherheitsrelevanter Informationen veranlasst.

Der Beschleunigungssensor 31 ermittelt kontinuierlich die Beschleunigung der Vorrichtung 30 bzw. eines Gerätes 40, in dem die Vorrichtung 30 angeordnet ist und zeichnet somit eine Bewegungstrajektorie 50, wie sie in Figur 5 beispielhaft dargestellt ist, auf. Die Bewegungstrajektorie 50 entspricht beispielsweise einer Fallkurve x(t) eines Objekts, das ausschließlich unter Einwirkung der Schwerkraft aus einer Höhe x₀ fällt. Wird über einen Zeitraum von beispielsweise t_{B} ein entsprechendes Bewegungsmuster 50 von der Überwachungseinheit 32 detektiert, wird von der Löscheinheit 33 der Löschvorgang ausgelöst. Entsprechend kann als Löschkriterium das Erreichen einer maximalen Beschleunigung, hier mit aₘₐₓ bezeichnet, über den vorgegebenen Zeitraum hinweg als Schwellwert überwacht werden. Ein Überwachungszeitraum t_{B}, ist dabei so gewählt, dass ein vorgegebenes Bewegungsmuster auch sicher von einer zufälligen ungewöhnlichen Bewegung unterschieden werden kann.

In Figur 4 ist ein Gerät 40 dargestellt, das eine Vorrichtung zum Löschen von sicherheitsrelevanten Informationen enthält. Das Gerät ist beispielsweise ein Feldgerät, ein Steuergerät, ein Satellitennavigationsempfänger oder ein Computersystem. Die genannten Geräte sind lediglich eine Auswahl an Geräten, in die die Vorrichtung integrierbar ist. Das Gerät 40 weist gerätespezifische Funktionseinheiten 43 auf sowie beispielsweise ein Sicherheitsmodul 41, in dem der Schlüsselspeicher 34 enthalten ist. Eine Detektionseinheit 31, die einen oder mehrere Sensoren zur Detektion mindestens eines Bewegungsparameters umfasst, ist mit einer Überwachungseinheit 32 verbunden, die die detektierten und über die Zeit aufgezeichneten Bewegungsparameter mit einem oder mehreren vorgegebenen Bewegungsmustern vergleicht und bei Überschreiten eines Schwellwerts oder bei Übereinstimmung mit einem vorgegebenen Bewegungsmuster die Löscheinheit 33 veranlasst beispielsweise ein Löschsignal über die Schnittstelle 42 an den Schlüsselspeicher 34 im Sicherheitsmodul 41 zu senden.

Die Vorrichtung zum Löschen von sicherheitsrelevanten Informationen kann somit in unterschiedlicher Weise in ein Gerät integriert sein. Die einzelnen Einheiten der Vorrichtung können beispielsweise alle in einem Sicherheitsmodul, wie in Figur 3 gezeigt, oder aber verteilt in einem Gerät, wie in Figur 4 gezeigt, implementiert sein. Die dargestellten Funktionsblöcke können in Hardware- oder als Software-basierte Funktionen realisiert sein. Die Vorrichtung 30 kann beispielsweise als Sicherheitsbaustein oder Crypto-Controller mit integriertem MEMS (mikroelektronisches mechanisches System) Sensor als Beschleunigungssensor und einem integrierten Crash-Detektor, der die Überwachungseinheit 32 bildet, aufgebaut sein. Das Gerät 40 kann beispielsweise ein Feldgerät mit einem MEMS-Beschleunigungssensor umfassen, der ein automatisches Löschen von Schlüsselmaterial ausführt, falls die detektierte Beschleunigung einen vorgegebenen Schwellwert für eine vorgegebene Zeit überschreitet.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum Löschen von sicherheitsrelevanter Information in einem Gerät, mit den Verfahrensschritten:
- kontinuierliches Ermitteln (11) mindestens eines Bewegungsparameters des Geräts (40) über die Zeit,
- kontinuierliches Überwachen (12) der ermittelten Bewegungsparameter über die Zeit in Abhängigkeit von mindestens einem vorgegebenen Bewegungsmuster, wobei das vorgegebene Bewegungsmuster eine Bewegungstrajektorie (50) des Geräts (40) ist, und
- Auslösen (13) eines Löschvorgangs der sicherheitsrelevanten Information, wenn der ermittelte Bewegungsparameter über die Zeit dem mindestens einen vorgegebenen Bewegungsmuster entspricht, wobei der Löschvorgang dann ausgelöst wird, wenn der mindestens eine Bewegungsparameter dem vorgegebenen Bewegungsmuster mindestens für eine vorgegebene Zeitdauer (tB) entspricht.

2. Verfahren nach Anspruch 1, wobei als Bewegungsparameter eine Position, eine Geschwindigkeit, eine Beschleunigung oder eine Ausrichtung des Geräts (40) ermittelt wird.

3. Verfahren nach einem der vorhergehenden Ansprüche, wobei der Löschvorgang dann ausgelöst wird, wenn der mindestens eine Bewegungsparameter dem vorgegebenen Bewegungsmuster zusätzlich mit einer vorbestimmten Genauigkeit entspricht.

4. Verfahren nach einem der vorhergehenden Ansprüche, wobei die vorgegebene Bewegungstrajektorie einen Sonderbetriebsmodus des Geräts (40) kennzeichnet.

5. Verfahren nach einem der vorhergehenden Ansprüche, wobei der Bewegungsparameter eines das Gerät (40) umgebenden Mediums ermittelt wird.

6. Vorrichtung (30) zum Löschen von sicherheitsrelevanter Information in einem Gerät (40), umfassend:
- eine Detektionseinheit (31), die derart ausgebildet ist mindestens einen Bewegungsparameter des Geräts (40) kontinuierlich zu ermitteln,
- eine Überwachungseinheit (32), die derart ausgebildet ist die ermittelten Bewegungsparameter über die Zeit in Abhängigkeit von mindestens einem vorgegebenen Bewegungsmuster kontinuierlich zu überwachen, wobei das vorgegebene Bewegungsmuster eine Bewegungstrajektorie (50) des Geräts (40) ist, und
- eine Löscheinheit (33), die derart ausgebildet ist einen Löschvorgang der sicherheitsrelevanten Information auszulösen, wenn der ermittelten Bewegungsparameter über die Zeit dem vorgegebenen Bewegungsmuster entspricht, wobei der Löschvorgang dann ausgelöst wird, wenn der mindestens eine Bewegungsparameter dem vorgegebenen Bewegungsmuster mindestens für eine vorgegebene Zeitdauer (tB) entspricht.

7. Vorrichtung (30) nach Anspruch 6, wobei die Detektionseinheit mindestens einen Sensor, bevorzugt einen Inertialsensor, einen Beschleunigungssensor, einen Magnetfeldsensor oder einen Lagesensor aufweist, der den mindestens einen Bewegungsparameter ermittelt.

8. Vorrichtung (30) nach Anspruch 6 oder 7, wobei mindestens die Löscheinheit mit einem Sicherheitsmodul, das sicherheitsrelevante Information speichert, direkt verbindbar ist.

9. Gerät (40) umfassend eine Vorrichtung nach einem der Ansprüche 6-8, wobei das Gerät (40) ein mobiles Gerät oder ein ortsfest installiertes Gerät ist.

10. Computerprogrammprodukt, das direkt in einen Speicher eines digitalen Computers ladbar ist, umfassend Programmcodeteile, die die Schritte des Verfahrens nach einem der Ansprüche 1 bis 5 durchführen.

11. Datenträger, der das Computerprogrammprodukt nach Anspruch 10 speichert.

## Claims

1. Method for erasing security-relevant information in a device, having the method steps of:
- continuously ascertaining (11) at least one movement parameter of the device (40) over time,
- continuously monitoring (12) the ascertained movement parameters over time on the basis of at least one prescribed movement pattern, wherein the prescribed movement pattern is a movement trajectory (50) of the device (40), and
- triggering (13) an erase process for the security-relevant information if the ascertained movement parameter over time is consistent with the at least one prescribed movement pattern, wherein the erase process is triggered if the at least one movement parameter is consistent with the prescribed movement pattern at least for a prescribed period (tB) .

2. Method according to Claim 1, wherein the movement parameter ascertained is a position, a speed, an acceleration or an orientation of the device (40).

3. Method according to either of the preceding claims, wherein the erase process is triggered if the at least one movement parameter is consistent with the prescribed movement pattern additionally with a predetermined accuracy.

4. Method according to one of the preceding claims, wherein the prescribed movement trajectory denotes a special mode of operation of the device (40).

5. Method according to one of the preceding claims, wherein the movement parameter of a medium surrounding the device (40) is ascertained.

6. Apparatus (30) for erasing security-relevant information in a device (40), comprising:
- a detection unit (31) designed to continuously ascertain at least one movement parameter of the device (40),
- a monitoring unit (32) designed to continuously monitor the ascertained movement parameters over time on the basis of at least one prescribed movement pattern, wherein the prescribed movement pattern is a movement trajectory (50) of the device (40), and
- an erasure unit (33) designed to trigger an erase process for the security-relevant information if the ascertained movement parameter over time is consistent with the prescribed movement pattern, wherein the erase process is triggered if the at least one movement parameter is consistent with the prescribed movement pattern at least for a prescribed period (tB) .

7. Apparatus (30) according to Claim 6, wherein the detection unit has at least one sensor, preferably an inertial sensor, an acceleration sensor, a magnetic field sensor or a position sensor, that ascertains the at least one movement parameter.

8. The apparatus (30) according to claim 6 or 7, wherein at least the erasure unit is directly connectable to a security module storing security-relevant information.

9. Device (40) comprising an apparatus according to one of Claims 6-8, wherein the device (40) is a mobile device or a device installed at a fixed location.

10. Computer program product loadable directly into a memory of a digital computer, comprising program code portions which perform the steps of the method according to one of Claims 1 to 5.

11. Data storage medium storing the computer program product according to Claim 10.

## Revendications

1. Procédé pour effacer des informations de sécurité dans un appareil, comportant les étapes suivantes :
- détermination (11) continue d'au moins un paramètre de mouvement de l'appareil (40) dans le temps,
- surveillance (12) continue des paramètres de mouvement déterminés dans le temps en fonction d'au moins un schéma de mouvement donné, le schéma de mouvement donné étant une trajectoire de mouvement (50) de l'appareil (40), et
- déclenchement (13) d'une opération d'effacement de l'information de sécurité si le paramètre de mouvement déterminé dans le temps correspond à l'au moins un schéma de mouvement donné, l'opération d'effacement étant déclenchée si l'au moins un paramètre de mouvement correspond au schéma de mouvement donné au moins pour une durée donnée (tB).

2. Procédé selon la revendication 1, en tant que paramètre de mouvement étant déterminées une position, une vitesse, une accélération ou une orientation de l'appareil (40).

3. Procédé selon l'une des revendications précédentes, l'opération d'effacement étant déclenchée si l'au moins un paramètre de mouvement correspond au schéma de mouvement donnée, en plus avec une précision prédéfinie.

4. Procédé selon l'une des revendications précédentes, la trajectoire de mouvement donnée caractérisant un mode de service spécial de l'appareil (40).

5. Procédé selon l'une des revendications précédentes, le paramètre de mouvement d'un milieu entourant l'appareil (40) étant déterminé.

6. Dispositif (30) pour effacer des informations de sécurité dans un appareil (40), comportant :
- une unité de détection (31) qui est conçue de manière à déterminer en continu au moins un paramètre de mouvement de l'appareil (40),
- une unité de surveillance (32) qui est conçue de manière à surveiller en continu les paramètres de mouvement déterminés dans le temps en fonction d'au moins un schéma de mouvement donné, le schéma de mouvement donné étant une trajectoire de mouvement (50) de l'appareil (40), et
- une unité d'effacement (33) qui est conçue de manière à déclencher une opération d'effacement de l'information de sécurité si le paramètre de mouvement déterminé dans le temps correspond à l'au moins un schéma de mouvement donné, l'opération d'effacement étant déclenchée si l'au moins un paramètre de mouvement correspond au schéma de mouvement donné au moins pour une durée donnée (tB).

7. Dispositif (30) selon la revendication 6, l'unité de détection comportant au moins un capteur, de préférence un capteur inertiel, un capteur d'accélération, un capteur de champ magnétique ou un capteur de position, qui détermine l'au moins un paramètre de mouvement.

8. Dispositif (30) selon la revendication 6 ou 7, au moins l'unité d'effacement pouvant être reliée directement à un module de sécurité qui sauvegarde des informations de sécurité.

9. Appareil (40) comprenant un dispositif selon l'une des revendications 6-8, l'appareil (40) étant un appareil mobile ou un appareil installé de manière stationnaire.

10. Produit de programme informatique qui peut être chargé directement dans une mémoire d'un ordinateur numérique, comprenant des parties de code de programme qui exécutent les étapes du procédé selon l'une des revendications 1 à 5.

11. Support de données qui sauvegarde le produit de programme informatique selon la revendication 10.
